# EUROPEAN PATENT APPLICATION

(11) **EP 3 745 233 A1**
(43) Date of publication of application: **02.12.2020**
(21) Application number: 18902431.8
(22) Date of filing: 27.12.2018
(51) Int. Cl.: G05G 5/03, F16D 63/00, G05G 1/10, H02K 7/102, F16F 9/12, F16F 9/53

(54) **INPUT DEVICE**

(30) Priority: 24.01.2018 JP 2018009610
(71) Applicant: Alps Alpine Co., Ltd., Ota-ku Tokyo 145-8501 (JP)
(72) Inventor: KOIKE, Asuka, Tokyo 145-8501 (JP); KUGE, Yoshihiro, Tokyo 145-8501 (JP); TAKAHASHI, Kazunari, Tokyo 145-8501 (JP); TAKAHASHI, Misuzu, Tokyo 145-8501 (JP)
(74) Representative: Schmitt-Nilson Schraud Waibel Wohlfrom Patentanwälte Partnerschaft mbB
(86) International application number: PCT/JP2018/048207
(87) International publication number: WO 2019/146371

(57) **Abstract**

An input device suitable for size reduction in a direction of a rotational axis of a rotating body includes a brake applying unit configured to apply a braking force to the rotating body and a torque applying unit configured to apply a driving torque for rotating the rotating body about the rotational axis to the rotating body. The brake applying unit includes a rotary plate rotatable together with the rotating body, magnetic viscous fluid disposed in a gap between a fixed portion and the rotary plate, and a brake applying coil configured to apply a magnetic field to the magnetic viscous fluid. The torque applying unit includes a stator and a rotor supported such that the rotor is rotatable with respect to the stator. One of the stator and the rotor of the torque applying unit includes a magnet and other of the stator and the rotor of the torque applying unit includes torque applying coils of at least two phases, the torque applying coils inducing magnetic fields for generating the driving torque applied to the rotating body. A controller is provided to control currents applied to the brake applying coil and the torque applying coils. The torque applying unit is disposed to surround an outer periphery of the brake applying unit.

## Description

### Technical Field

The present invention relates to an input device capable of varying rotational resistance by using magnetic viscous fluid.

### Background Art

An operation sensation imparting input device described in PTL 1 includes a rotary operation part; an encoder that detects a rotational state of the operation part; an armature rotor that rotates together with the operation part; an electromagnetic brake that applies rotational resistance to the operation part through the armature rotor; an electric motor that imparts autonomous rotation force to the operation part through a rotating shaft; and a controller that drives the electromagnetic brake and the electric motor. When rotational resistance is to be applied, the controller drives the electromagnetic brake to reduce power consumption. The controller is also capable of driving the electric motor to cause the operation part to rotate autonomously. The electromagnetic brake includes a winding disposed outside the electric motor so that the overall size of the device is reduced in a direction of a rotational axis.

### Citation List

### Patent Literature

PTL 1: Japanese Unexamined Patent Application Publication No. 2010-211270

### Summary of Invention

### Technical Problem

The operation sensation imparting input device described in PTL 1 is structured such that the armature rotor is disposed between the electric motor and the operation part. Therefore, reduction in the overall size in the direction of the rotational axis is limited by the sizes of these components.

Accordingly, an object of the present invention is to provide an input device suitable for size reduction in a direction of a rotational axis of a rotating body.

### Solution to Problem

To achieve the above-described object, an input device according to the present invention includes a fixed portion; a rotating body supported such that the rotating body is rotatable about a rotational axis; a rotation detection unit configured to detect a rotation of the rotating body; a brake applying unit configured to apply a braking force to the rotating body; and a torque applying unit configured to apply a driving torque for rotating the rotating body about the rotational axis to the rotating body. The brake applying unit includes a rotary plate rotatable together with the rotating body, magnetic viscous fluid disposed in a gap between the fixed portion and the rotary plate, and a brake applying coil configured to apply a magnetic field to the magnetic viscous fluid. The torque applying unit includes a stator and a rotor supported such that the rotor is rotatable with respect to the stator. One of the stator and the rotor of the torque applying unit includes a magnet and other of the stator and the rotor of the torque applying unit includes torque applying coils of at least two phases, the torque applying coils inducing magnetic fields for generating the driving torque applied to the rotating body. A controller is provided to control currents applied to the brake applying coil and the torque applying coils. The torque applying unit is disposed to surround an outer periphery of the brake applying unit.

Accordingly, size reduction in the direction of the rotational axis of the rotating body can be achieved. In addition, since the torque applying unit and the brake applying unit can be disposed close to each other, size reduction in a direction orthogonal to the rotational axis can also be achieved.

In the input device according to the present invention, preferably, the controller is capable of individually controlling a current applied to the brake applying coil and currents applied to the torque applying coils, and is capable of simultaneously generating the braking force and the driving torque.

In this case, various operation sensations can be provided to an operator.

In the input device according to the present invention, preferably, the rotor is supported such that the rotor is rotatable together with the rotating body, and includes an annular back yoke and a plurality of permanent magnets provided on an outer periphery of the back yoke and arranged such that poles of different polarities are alternately arranged in a circumferential direction of the back yoke, and the stator is disposed to surround a radially outer periphery of the rotor and face the permanent magnets, and includes coils formed of non-magnetic windings and a fixed member to which the coils are fixed, the coils serving as the torque applying coils.

In this case, magnetic cores having salient poles are not provided, and coils having no salient poles are used. Therefore, no cogging torque is generated in a rotating operation in which the coils are not energized. As a result, the operation sensations are not adversely affected by a cogging torque. In addition, when the fixed member of the stator is formed of a non-magnetic body, not only cogging due to variation in magnetic attraction force but also a rotational resistance due to a magnetic attraction force of a permanent magnet can be prevented.

In the input device according to the present invention, preferably, the torque applying coils include eight torque applying coils, and currents are applied to the torque applying coils such that adjacent ones of the torque applying coils generate magnetic fields in opposite directions. Two adjacent ones of the torque applying coils and two of the torque applying coils symmetric to the two adjacent ones of the torque applying coils about the rotational axis simultaneously receive currents in phase A, and remaining four of the torque applying coils simultaneously receive currents in phase B.

In this case, the curvature of the torque applying unit can be reduced, so that the torque applying unit can be easily manufactured. In addition, the area of the region in which the magnetic flux generated by the magnets extends through the torque applying coils can be increased without increasing the overall length in the direction of the rotational axis, and the driving torque can be increased accordingly.

In the input device according to the present invention, preferably, the brake applying unit includes a shaft portion configured to rotate together with the rotary plate, and the shaft portion is connected to the rotating body by a connecting member having spring characteristics.

In this case, a phase difference can be generated between the rotating operation of the shaft portion of the brake applying unit and the rotating operation of the rotating body. Therefore, even when the shaft portion of the brake applying unit is stopped in the end-stop state, if a low torque is applied to the rotating body, the shaft portion is twisted in response to the rotation of the rotating body. Accordingly, the rotation of the rotating body can be detected by the rotation detection unit, and a smooth operation sensation with small roughness can be provided to the operator by cancelling the end-stop state based on the result of the detection.

In the input device according to the present invention, preferably, the torque applying coils and the brake applying coil are arranged such that a center line of each of torque applying coils is orthogonal to a center line of the brake applying coil.

In this case, even when the torque applying coils and the brake applying coil are disposed close to each other, interference between the magnetic fields generated thereby can be reduced. Thus, the influence of the magnetic fields generated by the torque applying coils on the magnetic viscous fluid of the brake applying unit can be reduced.

### Advantageous Effects of Invention

According to the present invention, size reduction in the direction of the rotational axis of the rotating body can be achieved.

### Brief Description of Drawings

[Fig. 1] Figs. 1(a) and 1(b) are perspective views illustrating the structure of an input device according to an embodiment of the present invention.
[Fig. 2] Fig. 2 is an exploded perspective view of the input device illustrated in Figs. 1(a) and 1(b).
[Fig. 3] Fig. 3 is a sectional view of the input device according to the embodiment of the present invention taken along a rotational axis of a rotating body.
[Fig. 4] Fig. 4 is a functional block diagram of the input device according to the embodiment of the present invention.
[Fig. 5] Figs. 5(a) to 5(d) are plan views illustrating the relationships between air-core coils of a coil unit and magnets of a magnet unit according to the embodiment of the present invention.
[Fig. 6] Fig. 6(a) is a perspective view of a brake applying unit according to the embodiment of the present invention viewed from above, and Fig. 6(b) is a perspective view of the brake applying unit viewed from below.
[Fig. 7] Fig. 7 is an exploded perspective view of the brake applying unit according to the embodiment of the present invention viewed from above.
[Fig. 8] Fig. 8 is an exploded perspective view of the brake applying unit according to the embodiment of the present invention viewed from above.
[Fig. 9] Fig. 9 is a sectional view of Fig. 10(a) taken along line IX-IX'.
[Fig. 10] Fig. 10 is an enlarged view of part of Fig. 9.
[Fig. 11] Fig. 11(a) is a perspective view of the rotating body, a connecting member, and a shaft portion according to the embodiment of the present invention that are connected to each other, and Fig. 11(b) is a perspective view illustrating a state in which the connecting member, a connecting shaft portion, and the shaft portion are separated.
[Fig. 12] Fig. 12 is an exploded perspective view of the rotating body and the connecting member according to the embodiment of the present invention.

### Description of Embodiments

An input device according to an embodiment of the present invention will now be described in detail with reference to the drawings.

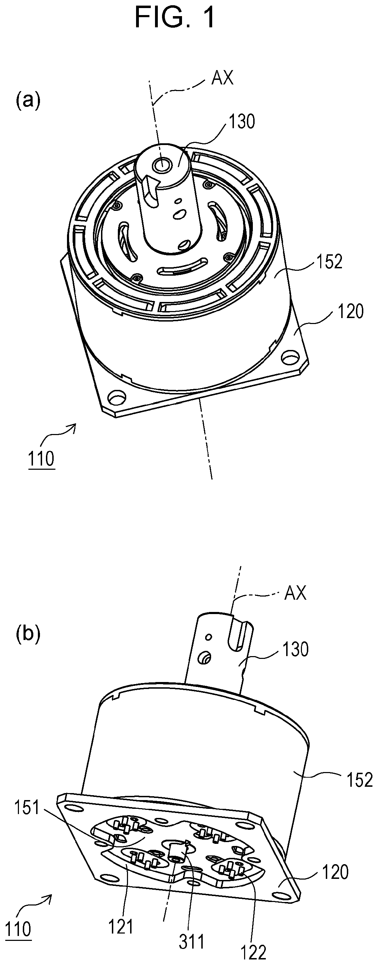

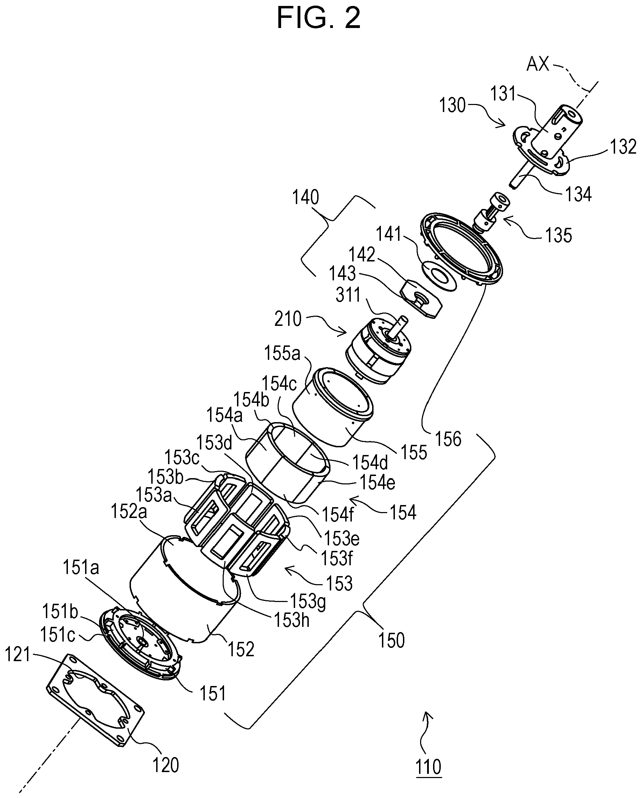

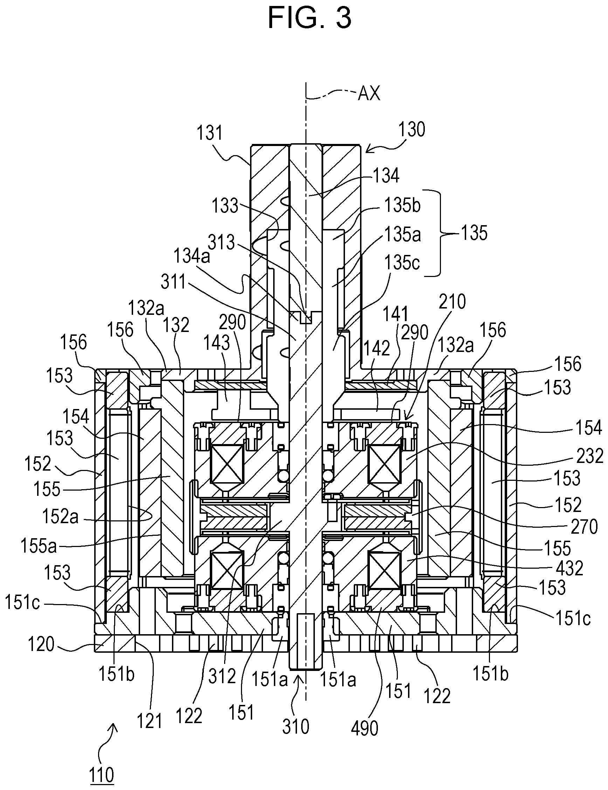

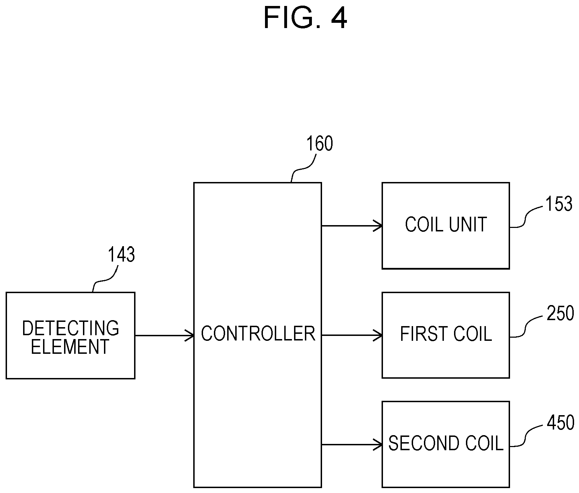

Figs. 1(a) and 1(b) are perspective views illustrating the structure of an input device 110 according to an embodiment of the present invention. Fig. 2 is an exploded perspective view of the input device 110 illustrated in Figs. 1(a) and 1(b). Fig. 3 is a sectional view of the input device 110 taken along a rotational axis AX of a rotating body 130. Fig. 4 is a functional block diagram of the input device 110. In the following description, the direction of the rotational axis AX, which is the rotation center of the rotating body 130, is referred to as an up-down direction, and a direction orthogonal to the rotational axis AX is referred to as a radial direction. The up-down direction may be set to any direction depending on, for example, the orientation of the input device. A view in the direction of the rotational axis AX is referred to as a plan view, and a direction of a circumference of a circle centered on the rotational axis AX in a plan view is referred to as a circumferential direction.

As illustrated in Fig. 2, the input device 110 according to the present embodiment includes a fixed portion 120, the rotating body 130, a connecting member 135, a rotation detection unit 140, a torque applying unit 150, and a brake applying unit 210, and is used in an assembled state illustrated in Figs. 1(a) and 1(b). The input device 110 further includes a controller 160 illustrated in Fig. 4.

### <Fixed Portion>

As illustrated in Fig. 2, the fixed portion 120 is a plate member composed of a non-magnetic body. The fixed portion 120 has an opening 121 that extends therethrough in the up-down direction in a central region thereof in plan view. A shaft portion 311 of the brake applying unit 210 extends to the outside through the opening 121 (see Fig. 1(b)).

### <Torque Applying Unit>

As illustrated in Fig. 2, the torque applying unit 150 includes a base plate 151, a fixed member 152, a coil unit 153, a magnet unit 154, a back yoke 155, and a coil holder 156, and is substantially symmetrical about the rotational axis AX. The fixed member 152, which is made of a non-magnetic material, and the coil unit 153, which is fixed to the inner peripheral surface of the fixed member 152, form a stator. The magnet unit 154, which is disposed to face the inner peripheral surface of the coil unit 153, and the back yoke 155, which is fixed to the inner peripheral surface of the magnet unit 154, form a rotor. The rotor is supported such that the rotor is rotatable with respect to the stator.

The base plate 151 is substantially circular plate-shaped, and is fixed to the fixed portion 120 so that the central axis thereof coincides with the rotational axis AX. As illustrated in Figs. 2 and 3, a cylindrical pretensioner 151a is disposed concentrically to the base plate 151 at the center of the base plate 151. As illustrated in Fig. 3, the pretensioner 151a is fixed such that the pretensioner 151a extends through the fixed portion 120 and the base plate 151 in the up-down direction. The pretensioner 151a radially supports a shaft 310 that extends therethrough.

As illustrated in Figs. 2 and 3, the base plate 151 has positioning recesses 151b arranged along the outer periphery thereof. The positioning recesses 151b serve as coil holders for positioning and holding lower portions of air-core coils 153a to 153h (described below). The base plate 151 also has an outer edge recess 151c disposed outside the positioning recesses 151b and recessed further downward from the positioning recesses 151b. Thus, the base plate 151 is substantially symmetrical about the rotational axis AX. As illustrated in Fig. 3, lower portions of the coil unit 153 are inserted into the positioning recesses 151b, so that the coil unit 153 is positioned.

As illustrated in Figs. 1(b) and 3, a plurality of conductive pins 122 are provided to extend through the base plate 151 in the up-down direction. The pins 122 are exposed to the outside through the opening 121 in the fixed portion 120 at the bottom of the input device 110. The controller 160 supplies predetermined currents to the coil unit 153, a first coil 250 of the brake applying unit 210, and a second coil 450 of the brake applying unit 210 through the pins 122.

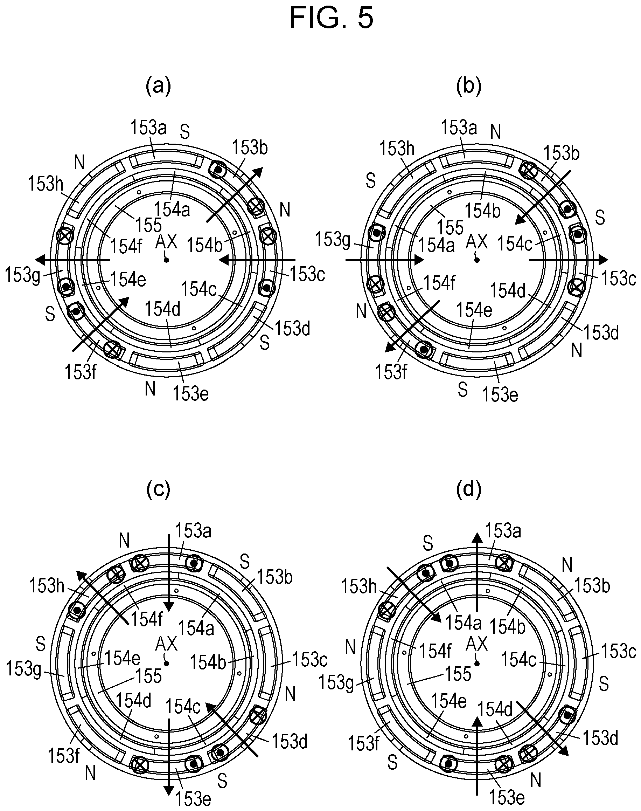

As illustrated in Fig. 3, a lower portion of the fixed member 152, which has a cylindrical shape, is fitted to the outer edge recess 151c of the base plate 151, so that the fixed member 152 is positioned along the outer periphery of the base plate 151 and fixed to the base plate 151 and the fixed portion 120. Thus, the fixed member 152 is substantially symmetrical about the rotational axis AX. As illustrated in Figs. 3 and 5, eight air-core coils 153a, 153b, 153c, 153d, 153e, 153f, 153g, and 153h, which serve as torque applying coils, are provided on the inner peripheral surface of the fixed member 152. The eight air-core coils 153a to 153h form the coil unit 153.

The above-described eight air-core coils 153a, 153b, 153c, 153d, 153e, 153f, 153g, and 153h are provided on an inner peripheral surface 152a (see Fig. 2) of the fixed member 152 and arranged in the circumferential direction thereof. The eight air-core coils 153a to 153h are arranged at constant angular intervals along a circle centered on the rotational axis AX, and are each wound around a center line extending radially from the rotational axis AX toward the circumference of the circle. Thus, the coil unit 153 is substantially symmetrical about the rotational axis AX. The air-core coils 153a to 153h each receive a current controlled by the controller 160 (see Fig. 4).

As illustrated in Fig. 2 and Figs. 5(a) to 5(d), the magnet unit 154 includes six magnets 154a, 154b, 154c, 154d, 154e, and 154f. These magnets 154a to 154f are disposed inside the air-core coils 153a to 153h of the coil unit 153 to face the air-core coils 153a to 153h such that the magnets 154a to 154f are radially spaced from the air-core coils 153a to 153h by a predetermined distance. In addition, as illustrated in Figs. 2 and 3, the magnets 154a to 154f are provided on an outer peripheral surface 155a of the back yoke 155, which has a cylindrical shape, and arranged in the circumferential direction thereof. The magnets 154a to 154f are arranged at constant angular intervals along a circle centered on the rotational axis AX, and each have magnetic poles arranged radially in a direction from the rotational axis AX toward the circumference of the circle. The magnetic poles are arranged such that opposite magnetic poles are disposed adjacent to each other. Thus, the magnet unit 154 and the back yoke 155 are each substantially symmetrical about the rotational axis AX. For simplification, only the magnetic poles at the outer periphery are illustrated in Figs. 5(a) to 5(d). For example, the magnet 154a has an S pole at the outer end and an N pole at the inner end adjacent to the rotational axis AX.

Figs. 5(a) to 5(d) are plan views illustrating the relationships between the air-core coils 153a to 153h of the coil unit 153 and the magnets 154a to 154f of the magnet unit 154. Figs. 5(a) to 5(d) illustrate states in which the magnets 154a to 154f are in stable positions, that is, positions where the maximum torque is generated, when the air-core coils 153a to 153h are in different energization states. Figs. 5(a) to 5(d) show the directions in which currents applied to the air-core coils 153a to 153h flow along the up-down direction (direction of the rotational axis AX): "×" shows the front-to-back direction in each figure, and "•" (black circle) shows the back-to-front direction in each figure.

As illustrated in Fig. 3, the eight air-core coils 153a to 153h are positioned in the up-down direction and held by the coil holder 156 and the base plate 151. As illustrated in Fig. 2, the coil holder 156 is ring-shaped, and is fixed to the outer peripheral surface of the fixed member 152 at the top end thereof so that the central axis of the coil holder 156 coincides with the rotational axis AX. Thus, the coil holder 156 is substantially symmetrical about the rotational axis AX. As described above, the base plate 151, the fixed member 152, the coil unit 153, the magnet unit 154, the back yoke 155, and the coil holder 156 are each substantially symmetrical about the rotational axis AX. Therefore, the overall structure of the torque applying unit 150 is substantially symmetrical about the rotational axis AX.

As illustrated in Figs. 5(a) to 5(d), currents are applied to the air-core coils 153a to 153h in groups of four, more specifically, to two adjacent air-core coils and other two adjacent air-coils that are symmetric to the first two adjacent air-core coils about the rotational axis AX.

Referring to Figs. 5(a) and 5(b), the state in which currents are applied to a group of coils including two adjacent air-core coils 153b and 153c and other two air-core coils 153f and 153g that are symmetric to the air-core coils 153b and 153c about the rotational axis AX is defined as phase A. Referring to Figs. 5(c) and 5(d), the state in which currents are applied to the other group of coils that receive no currents in phase A, that is, two adjacent air-core coils 153h and 153a and other two air-core coils 153d and 153e that are symmetric to the air-core coils 153h and 153a about the rotational axis AX, is defined as phase B. The four coils that form each group are connected in series. More specifically, the four air-core coils 153b, 153c, 153f, and 153g that correspond to phase A are connected in series, and the four air-core coils 153h, 153a, 153d, and 153e that correspond to phase B are connected in series.

Energization of the air-core coils 153a to 153h is controlled so that switching between the above-described two phases, that is, phase A and phase B, occurs every time the rotating body 130 rotates 120 degrees. Accordingly, switching between the states illustrated in Figs. 5(a) to 5(d) occurs three times during one revolution of the rotating body 130 at intervals of 120 degrees.

In the state illustrated in Fig. 5(a), the two adjacent air-core coils 153b and 153c receive currents in the opposite directions. In addition, the air-core coil 153f, which is symmetric to the air-core coil 153b about the rotational axis AX, receives a current in a direction opposite to that of the current applied to the air-core coil 153b, and the air-core coil 153g, which is symmetric to the air-core coil 153c, receives a current in a direction opposite to that of the current applied to the air-core coil 153c. Accordingly, as shown by the arrows in Fig. 5(a), the adjacent coils generate magnetic fields in the opposite directions, and two coils that are symmetric to each other about the rotational axis AX generate magnetic fields in the same direction.

The relationship between the currents applied to the air-core coils and the generated magnetic fields is similar in each of Figs. 5(b), 5(c), and 5(d).

The magnet unit 154 can be rotated or turned about the rotational axis AX with respect to the coil unit 153, which is fixed to the base plate 151, the fixed member 152, and the fixed portion 120, by applying currents to the air-core coils 153a to 153h in four patterns illustrated in Figs. 5(a) to 5(d). Accordingly, the back yoke 155, to which the magnet unit 154 is fixed, is also rotated or turned. The rotating body 130, which will be described below, is concentrically fixed to the back yoke 155, and rotating or turning driving torque is transmitted to the rotating body 130 when the magnet unit 154 is rotated or turned.

### <Brake Applying Unit>

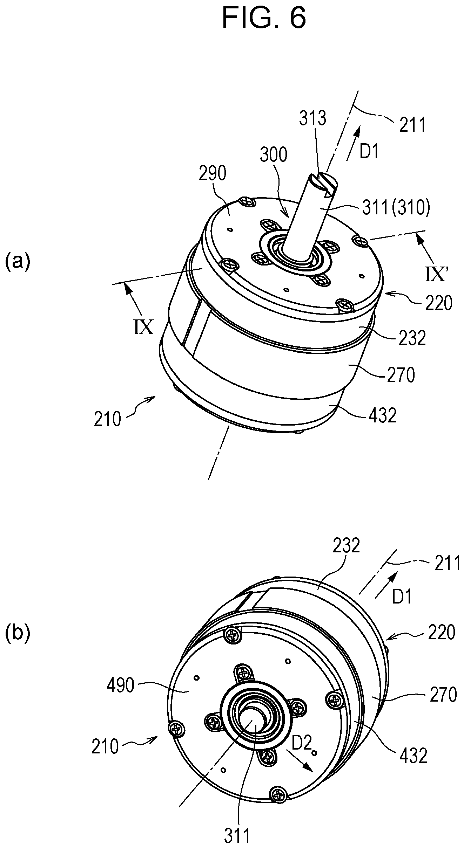

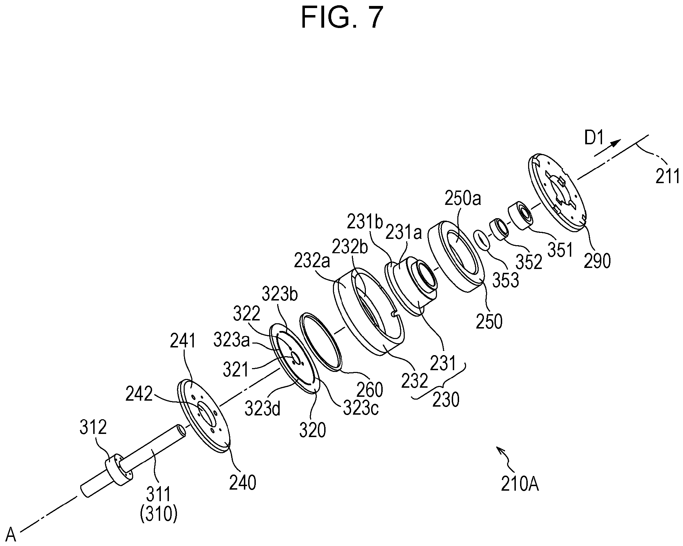

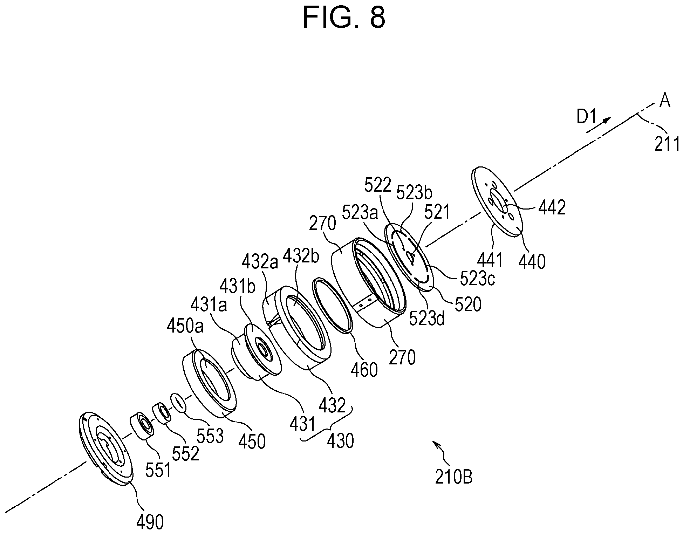

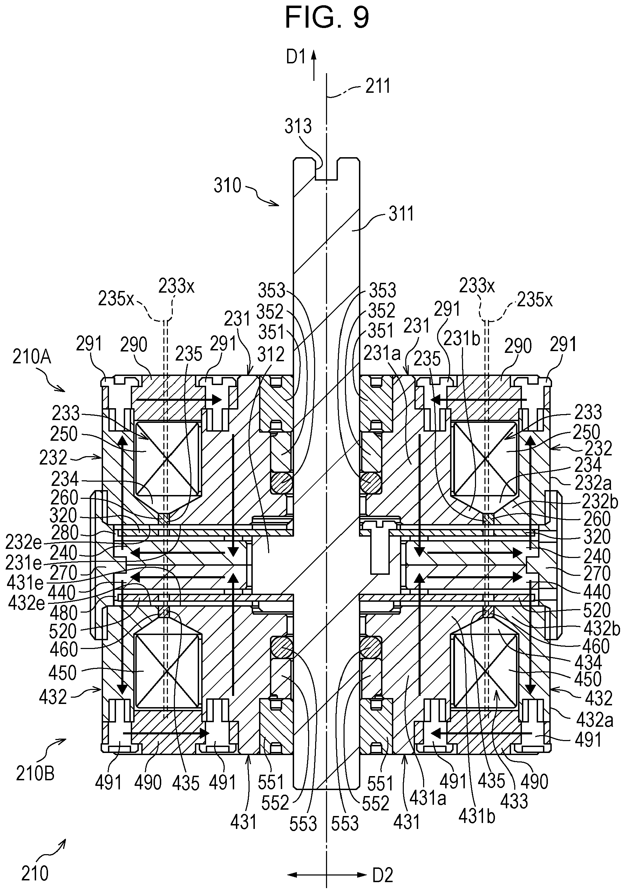

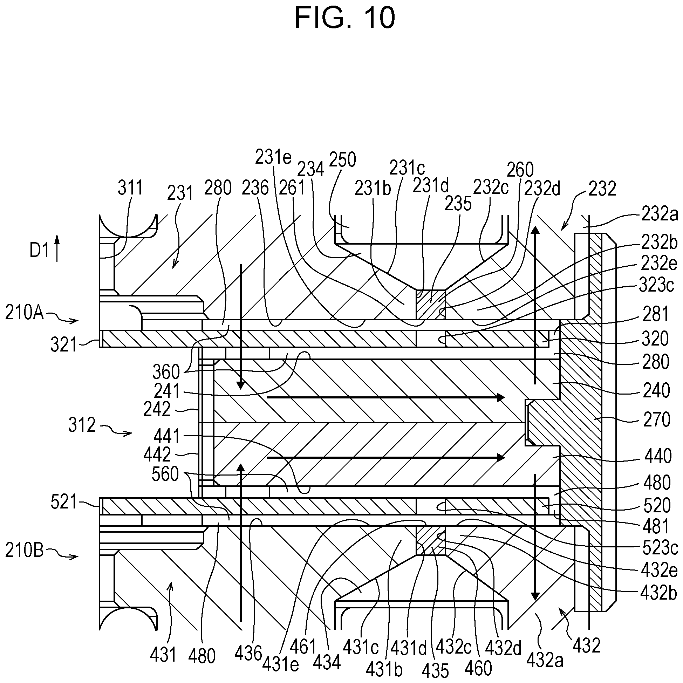

Fig. 6(a) is a perspective view of the brake applying unit 210 viewed from above, and Fig. 6(b) is a perspective view of the brake applying unit 210 viewed from below. Figs. 7 and Fig. 8 are exploded perspective views of the brake applying unit 210 viewed from above. Fig. 7 is a perspective view of an upper section 210A that is above position A, and Fig. 8 is a perspective view of a lower section 210B that is blow position A. Fig. 9 is a sectional view of Fig. 6(a) taken along line IX-IX', and conceptually illustrates magnetic fields generated by the two coils 250 and 450. Fig. 10 is an enlarged view of part of Fig. 9. In the following description, the direction of a central axis 211 is referred to as a first direction D1 (Figs. 6 and 9), and a radial direction orthogonal to the central axis 211 is referred to as a second direction D2 (Figs. 6 and 9). A view from above in the direction of the central axis 211 may be referred to as a plan view. In Figs. 7 and 8, some screws and magnetic viscous fluid are omitted.

As illustrated in Figs. 6(a) and 6(b), the brake applying unit 210 includes a holder unit 220 and a rotation operation unit 300, and is substantially symmetrical about the central axis 211. The rotation operation unit 300 includes the shaft 310 and two magnetic discs 320 and 520 (rotary plates), which are connected together to be capable of rotating together in both directions about the central axis 211 (rotational axis).

As illustrated in Fig. 3, the brake applying unit 210 is disposed in the back yoke 155 such that the outer peripheral surfaces of an outer yoke 232, an annular member 270, and an outer yoke 432, which will be described below, face the inner peripheral surface of the back yoke 155 and are spaced from the inner peripheral surface of the back yoke 155. In other words, the torque applying unit 150 is disposed to surround the outer periphery of the brake applying unit 210. The brake applying unit 210 is disposed such that the central axis 211 thereof coincides with the rotational axis AX of the rotating body 130, and the bottom surface of a third yoke 490 of the brake applying unit 210 is fixed to the base plate 151. In this state, the first direction D1 is the direction of the rotational axis AX, and the second direction D2 is orthogonal to the direction of the rotational axis AX.

The rotation operation unit 300 is rotatably supported on the holder unit 220 by two radial bearings 351 and 551 and two pushers 352 and 552 (see Figs. 7 and 8). As illustrated in Fig. 10, two gaps 280 and 480 formed in the brake applying unit 210 are filled with magnetic viscous fluids 360 and 560, respectively.

### (1) Structure of Holder Unit 220

In the upper section 210A illustrated in Fig. 7, the holder unit 220 includes a first yoke 230, a second yoke 240, the first coil 250, which serves as a brake applying coil, a sealing member 260, and a third yoke 290, which serves as an upper casing. As illustrated in Fig. 7, the first yoke 230 is disposed on one side of the magnetic disc 320 and the second yoke 240 is disposed on the other side of the magnetic disc 320 in the first direction D1. As described below, the first yoke 230, the second yoke 240, the first coil 250, the sealing member 260, and the third yoke 290 are each substantially symmetrical about the central axis 211 (rotational axis). Therefore, the overall structure in the upper section 210A of the holder unit 220 is substantially symmetrical about the central axis 211 (rotational axis).

In the lower section 210B illustrated in Fig. 8, the holder unit 220 includes a first yoke 430, a second yoke 440, the second coil 450, which serves as a brake applying coil, a sealing member 460, and the third yoke 490, which serves as a lower casing. As illustrated in Fig. 8, the first yoke 430 is disposed on one side of the magnetic disc 520 and the second yoke 440 is disposed on the other side of the magnetic disc 520 in the first direction D1. As described below, the first yoke 430, the second yoke 440, the second coil 450, the sealing member 460, and the third yoke 490 are each substantially symmetrical about the central axis 211 (rotational axis). Therefore, the overall structure of the lower section 210B of the holder unit 220 is substantially symmetrical about the central axis 211 (rotational axis).

The holder unit 220 includes the annular member 270 that extends in both the upper section 210A and the lower section 210B. In the upper section 210A, the first yoke 230, the second yoke 240, and the third yoke 290 are formed separately. In the lower section 210B, the first yoke 430, the second yoke 440, and the third yoke 490 are formed separately. However, some of these yokes may instead be formed integrally with each other.

As illustrated in Fig. 7, the first coil 250 in the upper section 210A has an annular shape. The first coil 250 is a coil including a conductive wire wound around the central axis 211. As illustrated in Fig. 8, the second coil 450 in the lower section 210B also has an annular shape. The second coil 450 is also a coil including a conductive wire wound around the central axis 211. Thus, the first coil 250 and the second coil 450 are each substantially symmetrical about the central axis 211 (rotational axis). The two coils 250 and 450 are electrically connected to connecting members (not shown), and currents are supplied thereto from the controller 160 along paths that are not illustrated. The coils 250 and 450 each generate a magnetic field when currents are supplied thereto.

As illustrated in Fig. 7, the first yoke 230 in the upper section 210A includes an inner yoke 231 as an inner peripheral member and the outer yoke 232 as an outer peripheral member. The inner yoke 231 and the outer yoke 232 are concentrically arranged about the central axis 211. As illustrated in Fig. 8, the first yoke 430 in the lower section 210B includes an inner yoke 431 as an inner peripheral member and the outer yoke 432 as an outer peripheral member. The inner yoke 431 and the outer yoke 432 are concentrically arranged about the central axis 211. Thus, the two first yokes 230 and 430 are each substantially symmetrical about the central axis 211 (rotational axis).

As illustrated in Fig. 7, the inner yoke 231 in the upper section 210A includes a cylindrical portion 231a and a flange-shaped portion 231b (Fig. 10) having an annular shape in plan view and extending radially outward from a lower surface of the cylindrical portion 231a. The outer diameter of the outer peripheral surface of an upper portion of the cylindrical portion 231a and the inner diameter of the inner peripheral surface of the cylindrical portion 231a vary depending on the positions in the up-down direction. As illustrated in Fig. 8, the inner yoke 431 in the lower section 210B includes a cylindrical portion 431a and a flange-shaped portion 431b (Fig. 10) having an annular shape in plan view and extending radially outward from an upper surface of the cylindrical portion 431a. The outer diameter of the outer peripheral surface of a lower portion of the cylindrical portion 431a and the inner diameter of the inner peripheral surface of the cylindrical portion 431a vary depending on the positions in the up-down direction.

As illustrated in Fig. 7, the outer yoke 232 in the upper section 210A includes a cylindrical portion 232a and an edge portion 232b having an annular shape in plan view and extending radially inward from a lower surface of the cylindrical portion 232a. Referring to Fig. 9 or 10, the inner peripheral surface of the cylindrical portion 232a of the outer yoke 232 faces the outer peripheral surface of the cylindrical portion 231a of the inner yoke 231 so that a first space 233 having an annular shape is formed therebetween. The first coil 250, which serves as a brake applying coil, is disposed in the first space 233. The third yoke 290, which is substantially circular plate-shaped, is placed on the inner yoke 231 from above, and is fixed to the inner yoke 231 and the outer yoke 232 with screws 291 so that the first space 233 is closed and that the inner yoke 231, the outer yoke 232, and the third yoke 290 form a magnetic path that surrounds the first coil 250. The third yoke 290 is disposed such that the center thereof is on the central axis 211, and is therefore substantially symmetrical about the central axis 211 (rotational axis).

As illustrated in Fig. 8, the outer yoke 432 in the lower section 210B includes a cylindrical portion 432a and an edge portion 432b having an annular shape in plan view and extending radially inward from an upper surface of the cylindrical portion 432a. Referring to Fig. 9 or 10, the inner peripheral surface of the cylindrical portion 432a of the outer yoke 432 faces the outer peripheral surface of the cylindrical portion 431a of the inner yoke 431 so that a first space 433 having an annular shape is formed therebetween. The second coil 450, which serves as a brake applying coil, is disposed in the first space 433. The third yoke 490, which is substantially circular plate-shaped, is disposed below the inner yoke 431 and fixed to the inner yoke 431 and the outer yoke 432 with screws 491 so that the first space 433 is closed and that the inner yoke 431, the outer yoke 432, and the third yoke 490 form a magnetic path that surrounds the second coil 450. The third yoke 490 is disposed such that the center thereof is on the central axis 211, and is therefore substantially symmetrical about the central axis 211 (rotational axis).

As illustrated in Fig. 9, in the upper section 210A, annular spaces 234 and 235 are also formed between the inner peripheral surface of the edge portion 232b of the outer yoke 232 and the outer peripheral surface of the flange-shaped portion 231b of the inner yoke 231. The second space 234 is connected to the above-described first space 233, and the third space 235 is connected to the second space 234.

As illustrated in Fig. 10, the inner peripheral surface of the flange-shaped portion 231b includes a first surface 231c that is inclined outward in the radial direction (direction D2 in Fig. 9) and downward and a second surface 231d that extends in the first direction (direction D1 in Fig. 10) from the bottom end of the first surface 231c. The inner peripheral surface of the edge portion 232b includes a first surface 232c that is inclined inward in the radial direction and downward and a second surface 232d that extends in the first direction D1 from the bottom end of the first surface 232c. The first surface 231c of the inner yoke 231 and the first surface 232c of the outer yoke 232 are disposed at positions corresponding to each other in the first direction D1 so as to form the second space 234 therebetween. The second space 234 is a space in which no object is disposed, and forms a magnetic gap whose width in the radial direction decreases toward the bottom. In other words, the magnetic gap is shaped such that the width thereof in the radial direction increases toward the first coil 250, that is, toward the top.

The second surface 231d and the second surface 232d are arranged to extend parallel to each other and face each other in the radial direction at positions corresponding to each other in the first direction D1, thereby forming the third space 235 therebetween. The sealing member 260, which is composed of a non-magnetic body, is disposed in the third space 235, so that the second space 234 and the third space 235 form a magnetic gap.

The sealing member 260 has an annular shape and is made of a non-magnetic material, such as a synthetic resin. The sealing member 260 is formed by, for example, filling the third space 235 with a material in a fluid state and solidifying the material. Alternatively, an elastic material formed in an annular shape may be fitted into the third space 235. Alternatively, a non-elastic material may be formed into an annular shape and fixed with an adhesive. The sealing member 260 disposed in the third space 235 is substantially symmetrical about the central axis 211 (rotational axis).

A lower surface 231e of the inner yoke 231 and a lower surface 232e of the outer yoke 232 form a facing surface that faces the magnetic disc 320 (Figs. 9 and 10). The facing surface is divided into inner and outer regions by the magnetic gap formed by the second space 234 and the third space 235. The inner region corresponds to the lower surface 231e of the inner yoke 231, and the outer region corresponds to the lower surface 232e of the outer yoke 232. The magnetic gap is provided at a position such that the inner region of the facing surface that is inside the magnetic gap and the outer region of the facing surface that is outside the magnetic gap have substantially the same area.

The inner yoke 231 and the outer yoke 232 have substantially the same cross-sectional area along a plane orthogonal to the central axis 211 at the position where the first coil 250 is disposed. Accordingly, a magnetic field having an optimum structure can be realized until the saturation magnetic flux density is reached.

As illustrated in Fig. 9, in the lower section 210B, annular spaces 434 and 435 are also formed between the inner peripheral surface of the edge portion 432b of the outer yoke 432 and the outer peripheral surface of the flange-shaped portion 431b of the inner yoke 431. The second space 434 is connected to the above-described first space 433, and the third space 435 is connected to the second space 434.

As illustrated in Fig. 10, the inner peripheral surface of the flange-shaped portion 431b includes a first surface 431c that is inclined outward in the radial direction and upward and a second surface 431d that extends in the first direction D1 from the top end of the first surface 431c. The inner peripheral surface of the edge portion 432b includes a first surface 432c that is inclined inward in the radial direction and upward and a second surface 432d that extends in the first direction D1 from the top end of the first surface 432c. The first surface 431c of the inner yoke 431 and the first surface 432c of the outer yoke 432 are disposed at positions corresponding to each other in the first direction D1 so as to form the second space 434 therebetween. The second space 434 is a space in which no object is disposed, and forms a magnetic gap whose width in the radial direction decreases toward the top. In other words, the magnetic gap is shaped such that the width thereof in the radial direction increases toward the second coil 450, that is, toward the bottom.

The second surface 431d and the second surface 432d are arranged to extend parallel to each other and face each other in the radial direction at positions corresponding to each other in the first direction D1, thereby forming the third space 435 therebetween. The sealing member 460, which is composed of a non-magnetic body, is disposed in the third space 435, so that the second space 434 and the third space 435 form a magnetic gap. The sealing member 460 and the above-described sealing member 260 have the same structure and are made of the same material. Thus, the sealing member 460 disposed in the third space 435 is substantially symmetrical about the central axis 211 (rotational axis).

An upper surface 431e of the inner yoke 431 and an upper surface 432e of the outer yoke 432 form a facing surface that faces the magnetic disc 520 (Figs. 9 and 10). The facing surface is divided into inner and outer regions by the magnetic gap formed by the second space 434 and the third space 435. The inner region corresponds to the upper surface 431e of the inner yoke 431, and the outer region corresponds to the upper surface 432e of the outer yoke 432. The magnetic gap is provided at a position such that the inner region of the facing surface that is inside the magnetic gap and the outer region of the facing surface that is outside the magnetic gap have substantially the same area.

The inner yoke 431 and the outer yoke 432 have substantially the same cross-sectional area along a plane orthogonal to the central axis 211 at the position where the second coil 450 is disposed. Accordingly, a magnetic field having an optimum structure can be realized until the saturation magnetic flux density is reached.

As illustrated in Fig. 9, in the upper section 210A, the width of the first space 233 is set to be greater than the width of the second space 234 in the radial direction (second direction D2). In addition, a center position 235x of the third space 235 in the radial direction is located outside a center position 233x of the first space 233 in the radial direction. Similarly, in the lower section 210B, the width of the first space 433 is set to be greater than the width of the second space 434. In addition, the center position of the third space 435 in the radial direction coincides with the above-described center position 235x, and is located outside the above-described center position 233x, which coincides with the center position of the first space 433 in the radial direction.

Accordingly, in the upper section 210A, the first surface 231c of the inner yoke 231 and the first surface 232c of the outer yoke 232 have different inclination angles with respect to the first direction D1, and the first surface 231c of the inner yoke 231 has a greater inclination angle. In other words, the first surface 231c of the inner yoke 231 has a smaller inclination angle with respect to the radial direction. Similarly, in the lower section 210B, the first surface 431c of the inner yoke 431 and the first surface 432c of the outer yoke 432 have different inclination angles with respect to the first direction D1, and the first surface 431c of the inner yoke 431 has a greater inclination angle. In other words, the first surface 431c of the inner yoke 431 has a smaller inclination angle with respect to the radial direction.

As illustrated in Fig. 9, the inner yoke 231 and the outer yoke 232 in the upper section 210A are shaped such that the center position 235x of the third space 235 in the radial direction is located outside the center of the overall body of the first yoke 230 in the radial direction. Accordingly, the lower surface 231e serving as a facing surface of the inner yoke 231 that faces the magnetic disc 320 and the lower surface 232e serving as a facing surface of the outer yoke 232 that faces the magnetic disc 320 have substantially the same area in plan view. Thus, the magnetic flux density in the region inside the magnetic gap and that in the region outside the magnetic gap are substantially equal to each other.

The inner yoke 431 and the outer yoke 432 in the lower section 210B are also shaped such that the above-described center position 235x, which coincides with the center position of the third space 435 in the radial direction, is located outside the center of the overall body of the first yoke 430 in the radial direction. Accordingly, the upper surface 431e serving as a facing surface of the inner yoke 431 that faces the magnetic disc 520 and the upper surface 432e serving as a facing surface of the outer yoke 432 that faces the magnetic disc 520 have substantially the same area in plan view. Thus, the magnetic flux density in the region inside the magnetic gap and that in the region outside the magnetic gap are substantially equal to each other.

As illustrated in Fig. 7, the second yoke 240 in the upper section 210A has the shape of a circular plate, and is disposed below the first yoke 230 so that the center of the circular plate is on the central axis 211. The second yoke 240 has a top surface 241 that is orthogonal to the up-down direction, which is the direction of the central axis 211. The second yoke 240 has an annular hole 242 that surrounds the central axis 211 and extends through the second yoke 240 in the up-down direction. As illustrated in Fig. 8, the second yoke 440 in the lower section 210B has the shape of a circular plate, and is disposed above the first yoke 430 so that the center of the circular plate is on the central axis 211. The second yoke 440 has a bottom surface 441 that is orthogonal to the up-down direction, which is the direction of the central axis 211. The second yoke 440 has an annular hole 442 that surrounds the central axis 211 and extends through the second yoke 440 in the up-down direction. The two second yokes 240 and 440 are substantially symmetrical about the central axis 211 (rotational axis).

As illustrated in Fig. 9, the second yoke 240 and the second yoke 440 are stacked in the first direction D1 such that the second yoke 240 is disposed above the second yoke 440, and the shaft portion 311 of the shaft 310 is inserted through the hole 242 in the second yoke 240 and the hole 442 in the second yoke 440. The shaft portion 311 is disposed to extend in the first direction D1, and has a flange portion 312 at substantially the center thereof in the extending direction. The flange portion 312 is flange-shaped and extends outward from the outer peripheral surface of the shaft portion 311. The thickness of the flange portion 312 in the first direction D1 is greater than the total thickness of the second yoke 240 and the second yoke 440 by a predetermined amount. The predetermined amount corresponds to the dimensions of the gaps between the second yoke 240 and the magnetic disc 320 and between the second yoke 440 and the magnetic disc 520.

The shapes of the yokes 230, 240, 290, 430, 440, and 490 in plan view are not limited to circular shapes.

As illustrated in Fig. 10, in the upper section 210A, a bottom surface 236 of the first yoke 230 and a lower surface 261 of the sealing member 260 are substantially parallel to the top surface 241 of the second yoke 240, and the magnetic disc 320 is disposed between the bottom surface 236 and the top surface 241. The gap 280 is formed between the magnetic disc 320 and the bottom surface 236 and between the magnetic disc 320 and the top surface 241. In the lower section 210B, a top surface 436 of the first yoke 430 and an upper surface 461 of the sealing member 460 are substantially parallel to the bottom surface 441 of the second yoke 440, and the magnetic disc 520 is disposed between the top surface 436 and the bottom surface 441. The gap 480 is formed between the magnetic disc 520 and the top surface 436 and between the magnetic disc 520 and the bottom surface 441.

The annular member 270 is disposed outside the first yoke 230 and the second yoke 240 in the radial direction in the upper section 210A, and outside the first yoke 430 and the second yoke 440 in the radial direction in the lower section 210B. The annular member 270 has an annular shape having an axis that coincides with the central axis 211, and is made of a non-magnetic material, such as a synthetic resin. The inner peripheral surface of the annular member 270 is shaped to extend along the first yoke 230 and the second yoke 240 in the upper section 210A and along the first yoke 430 and the second yoke 440 in the lower section 210B, and is fixed to the outer peripheral surface of each yoke. Accordingly, the first yoke 230 in the upper section 210A, the second yoke 240 in the upper section 210A, the second yoke 440 in the lower section 210B, and the first yoke 430 in the lower section 210B are arranged in that order in the first direction D1 and connected to each other by the annular member 270 that extends in the first direction D1. The gap 280 in the upper section 210A and the gap 480 in the lower section 210B are each closed by the annular member 270 in the radial direction.

As described above, the first yoke 230 and the second yoke 240 in the upper section 210A and the second yoke 440 and the first yoke 430 in the lower section 210B are arranged in that order and connected to each other by the annular member 270, and thus the holder unit 220 is integrally fixed. It is not necessary that the entire body of the annular member 270 be made of a non-magnetic material, and the annular member 270 may instead be made of a composite material including a non-magnetic portion that prevents magnetic short-circuiting between the first yoke 230 and the second yoke 240 in the upper section 210A and between the first yoke 430 and the second yoke 440 in the lower section 210B. Also in this case, the gap 480 is preferably closed by the non-magnetic portion in the radial direction.

As illustrated in Figs. 9 and 10, in the upper section 210A, the magnetic disc 320 extends in the direction orthogonal to the central axis 211 in the gap 280 between the first yoke 230 and the second yoke 240. Thus, the magnetic disc 320 is positioned to overlap the first coil 250 in the direction of the central axis 211. In the lower section 210B, the magnetic disc 520 extends in the direction orthogonal to the central axis 211 in the gap 480 between the first yoke 430 and the second yoke 440. Thus, the magnetic disc 520 is positioned to overlap the second coil 450 in the direction of the central axis 211. The annular member 270 surrounds the outer peripheral surface of the magnetic disc 320 over the entire circumference with a gap 281 therebetween, and also surrounds the outer peripheral surface of the magnetic disc 520 over the entire circumference with a gap 481 therebetween.

In the upper section 210A, the inner yoke 231 and the outer yoke 232 of the first yoke 230 and the third yoke 290 are connected together, and the second yoke 240 is connected thereto with the magnetic disc 320 provided therebetween as described above, so that a closed-loop magnetic path (magnetic circuit) for a magnetic field generated by the first coil 250 is formed. Similarly, in the lower section 210B, the inner yoke 431 and the outer yoke 432 of the first yoke 430 and the third yoke 490 are connected together, and the second yoke 440 is connected thereto with the magnetic disc 520 provided therebetween as described above, so that a closed-loop magnetic path (magnetic circuit) for a magnetic field generated by the second coil 450 is formed.

When a current is applied to each of the two coils 250 and 450 in the above-described structure, magnetic fields are generated in directions schematically shown by the arrows in Fig. 10. When a current is applied to each of the coils 250 and 450 in the opposite direction, magnetic fields are generated in directions opposite to those illustrated in Fig. 10.

In the example illustrated in Fig. 10, in the upper section 210A, magnetic flux extends from the inner yoke 231 of the first yoke 230 toward the second yoke 240 in the direction of the central axis 211, passes through the magnetic disc 320 disposed in the gap 280, and extends through the second yoke 240 in the direction away from the central axis 211. Then, in a radially outer region of the second yoke 240, the magnetic flux extends upward in the direction of the central axis 211, that is, from the second yoke 240 toward the outer yoke 232. The magnetic flux extends through the third yoke 290 disposed above the first coil 250 in the direction from the outer yoke 232 to the inner yoke 231, that is, in the direction toward the central axis 211, and then extends downward through the inner yoke 231 of the first yoke 230 in a region inside the first coil 250. Then, the magnetic flux passes through the magnetic disc 320 again and reaches the second yoke 240.

As illustrated in Fig. 10, in the lower section 210B, magnetic flux extends from the inner yoke 431 of the first yoke 430 toward the second yoke 440 in the direction of the central axis 211, passes through the magnetic disc 520 disposed in the gap 480, and extends through the second yoke 440 in the direction away from the central axis 211. Then, in a radially outer region of the second yoke 440, the magnetic flux extends downward in the direction of the central axis 211, that is, from the second yoke 440 toward the outer yoke 432. The magnetic flux extends through the third yoke 490 disposed below the second coil 450 in the direction from the outer yoke 432 to the inner yoke 431, that is, in the direction toward the central axis 211, and then extends upward through the inner yoke 431 of the first yoke 430 in a region inside the second coil 450. Then, the magnetic flux extends through the magnetic disc 520 again and reaches the second yoke 440.

The first yoke 230 in the upper section 210A has the second space 234 and the third space 235 that form a magnetic gap in the magnetic field having the above-described magnetic path. This magnetic gap is provided below the first coil 250 and between the first coil 250 and the gap 280 in which the magnetic disc 320 is disposed. The first coil 250 is spaced from the magnetic disc 320 and disposed in the first yoke 230, and the magnetic gap is formed in a portion of the space between the first coil 250 and the magnetic disc 320. Therefore, in the region around the magnetic gap, the magnetic flux of the magnetic field generated by the first coil 250 is restrained from extending through the first yoke 230 in the radial direction orthogonal to the central axis 211. In other words, in the space between the first coil 250 and the magnetic disc 320, the magnetic flux of the magnetic field generated by the first coil 250 can be directed toward the magnetic disc 320 along two inclined surfaces, which are the first surface 231c of the inner yoke 231 and the first surface 232c of the outer yoke 232. Accordingly, the magnetic flux that passes through the inner yoke 231 reliably extends downward toward the second yoke 240, and the magnetic flux that passes through the outer yoke 232 reliably extends upward in the direction from the second yoke 240 toward the third yoke 290.

The first yoke 430 in the lower section 210B also has the second space 434 and the third space 435 that form a magnetic gap. This magnetic gap is provided above the second coil 450 and between the second coil 450 and the gap 480 in which the magnetic disc 520 is disposed. The second coil 450 is spaced from the magnetic disc 520 and disposed in the first yoke 430, and the magnetic gap is formed in a portion of the space between the second coil 450 and the magnetic disc 520. Therefore, in the region around the magnetic gap, the magnetic flux of the magnetic field generated by the second coil 450 is restrained from extending through the first yoke 430 in the radial direction orthogonal to the central axis 211. In other words, in the space between the second coil 450 and the magnetic disc 520, the magnetic flux of the magnetic field generated by the second coil 450 can be directed toward the magnetic disc 520 along two inclined surfaces, which are the first surface 431c of the inner yoke 431 and the first surface 432c of the outer yoke 432. Accordingly, the magnetic flux that passes through the inner yoke 431 reliably extends upward toward the second yoke 440, and the magnetic flux that passes through the outer yoke 432 reliably extends downward in the direction from the second yoke 440 toward the third yoke 490.

The magnetic fields generated in the upper section 210A and the lower section 210B of the brake applying unit 210 are generated by the coils 250 and 450 wound around the central axis 211 that coincides with the rotational axis AX. In contrast, the magnetic fields generated in the torque applying unit 150 are generated by the air-core coils 153a to 153h wound around radial lines that are orthogonal to the rotational axis AX. Thus, the center line of the two coils 250 and 450 of the brake applying unit 210 is orthogonal to the center lines of the air-core coils 153a to 153h of the torque applying unit 150, so that interference between the magnetic fields generated in the brake applying unit 210 and the magnetic fields generated in the torque applying unit 150 can be reduced.

### (2) Structure of Rotation Operation Unit 300

As illustrated in Figs. 7 and 9, the shaft 310 is a rod-shaped component that extends along the central axis 211 in the up-down direction, and includes the flange portion 312 provided substantially at the center thereof in the first direction D1 and the shaft portion 311 that extends from the flange portion 312 in the up-down direction. Thus, the rotation operation unit 300 is substantially symmetrical about the central axis 211 (rotational axis). As described above, the upper section 210A and the lower section 210B of the holder unit 220 are each substantially symmetrical about the central axis 211 (rotational axis). Therefore, the overall body of the brake applying unit is substantially symmetrical about the central axis 211 (rotational axis).

As illustrated in Figs. 7 and 8, the magnetic disc 320 in the upper section 210A and the magnetic disc 520 in the lower section 210B have the shape of a circular plate with a circular flat surface orthogonal to the first direction D1, and are made of a magnetic material. The magnetic discs 320 and 520 have the same shape.

The magnetic disc 320 in the upper section 210A has a center hole 321 that extends therethrough in the first direction D1 at the center of the circular flat surface. The magnetic disc 320 also has a plurality of through holes 322 that extend therethrough in the up-down direction at positions around the center hole 321. The magnetic disc 320 is fixed to the shaft 310 by inserting screws (only one of which is illustrated) through the through holes 322 in the first direction D1 and fitting shaft portions of the screws to the flange portion 312 of the shaft 310.

The magnetic disc 520 in the lower section 210B has a center hole 521 that extends therethrough in the first direction D1 at the center of the circular flat surface. The magnetic disc 520 also has a plurality of through holes 522 that extend therethrough in the up-down direction at positions around the center hole 521. The magnetic disc 520 is fixed to the shaft 310 by inserting screws (only one of which is illustrated) through the through holes 522 in the first direction D1 and fitting shaft portions of the screws to the flange portion 312 of the shaft 310.

As illustrated in Fig. 10, the inner diameter of the center hole 321 in the magnetic disc 320 in the upper section 210A and the inner diameter of the center hole 521 in the magnetic disc 520 in the lower section 210B are each substantially equal to the outer diameter of the shaft portion 311 of the shaft 310 and less than the outer diameter of the flange portion 312. In addition, as described above, the thickness of the flange portion 312 in the first direction D1 is greater than the total thickness of the second yoke 240 and the second yoke 440 by a predetermined amount.

Accordingly, when the flange portion 312 is inserted through the hole 242 and the hole 442 while the second yoke 240 and the second yoke 440 are stacked together in the first direction D1, the flange portion 312 projects upward from the top surface 241 of the second yoke 240 so as to be in contact with the lower surface of the magnetic disc 320, and projects downward from the bottom surface 441 of the second yoke 440 so as to be in contact with the upper surface of the magnetic disc 520. The height of a portion of the gap 280 between the magnetic disc 320 and the second yoke 240 is determined by the amount by which the flange portion 312 projects from the second yoke 240, and the height of a portion of the gap 480 between the magnetic disc 520 and the second yoke 440 is determined by the amount by which the flange portion 312 projects from the second yoke 440.

As illustrated in Fig. 9, the shaft portion 311 of the shaft 310 is rotatably supported by the radial bearing 351 in the upper section 210A, and the radial bearing 351 is supported and urged upward in the first direction D1 (upward in Fig. 9) by the pusher 352. The pusher 352 is supported by an O-ring 353 disposed between the outer peripheral surface of the shaft portion 311 and the inner peripheral surface of the inner yoke 231 such that the position thereof in the up-down direction is maintained. Thus, the radial bearing 351 is supported at a predetermined position in the first direction D1 while being continuously in tight contact with the first yoke 230. An upper portion of the shaft portion 311 projects upward from the third yoke 290 and is exposed. The exposed portion of the shaft portion 311 has a joining recess 313 to which a joining projection 134a of the connecting shaft portion 134 is fitted.

As illustrated in Fig. 9, the shaft portion 311 of the shaft 310 is rotatably supported by the radial bearing 551 in the lower section 210B, and the radial bearing 551 is supported and urged downward in the first direction D1 by the pusher 552. The pusher 552 is supported by an O-ring 553 disposed between the outer peripheral surface of the shaft portion 311 and the inner peripheral surface of the inner yoke 431 such that the position thereof in the up-down direction is maintained. Thus, the radial bearing 551 is supported at a predetermined position in the first direction D1 while being continuously in tight contact with the first yoke 430. A lower portion of the shaft portion 311 projects downward from the third yoke 490 by a predetermined amount and is exposed. The amount by which the lower portion of the shaft portion 311 projects is set such that the shaft portion 311 can be reliably supported by the radial bearing 551.

As illustrated in Fig. 7, the magnetic disc 320 in the upper section 210A has four slits 323a, 323b, 323c, and 323d that extend therethrough in the first direction D1 (thickness direction). These slits are provided at the same distance from the center of the circular flat surface and extend in the circumferential direction at constant angular intervals. In addition, the slits are provided at a position corresponding to the position of the third space 235 in the radial direction. When the first coil 250 generates the magnetic field illustrated in Fig. 10, the four slits 323a, 323b, 323c, and 323d serve as magnetic gaps so that the magnetic flux of the magnetic field is restrained from passing through the four slits 323a, 323b, 323c, and 323d in the radial direction.

The magnetic flux extends downward from the inner yoke 231 of the first yoke 230 toward the second yoke 240 in a region closer to the central axis 211 than the four slits 323a, 323b, 323c, and 323d (inner region). In the region outside the four slits 323a, 323b, 323c, and 323d, the magnetic flux extends upward from the second yoke 240 toward the outer yoke 232 of the first yoke 230. The magnetic flux is restrained from passing through the four slits in the magnetic disc 320 in the radial direction. Since the four slits are provided at a position corresponding to the position of the third space 235, the second space 234, the third space 235, and the four slits 323a, 323b, 323c, and 323d are arranged in the first direction D1. Therefore, the magnetic field generated by the first coil 250 is reliably restrained from extending through the first yoke 230 or the magnetic disc 320 in the radial direction, and a stable magnetic circuit can be obtained.

As illustrated in Fig. 8, the magnetic disc 520 in the lower section 210B also has four slits 523a, 523b, 523c, and 523d that extend therethrough in the first direction D1 (thickness direction). These slits are provided at the same distance from the center of the circular flat surface and extend in the circumferential direction at constant angular intervals. In addition, the slits are provided at a position corresponding to the position of the third space 435 in the radial direction. The magnetic flux is restrained from passing through the four slits in the magnetic disc 520 in the radial direction. When the second coil 450 generates the magnetic field illustrated in Fig. 10, the four slits 523a, 523b, 523c, and 523d serve as magnetic gaps so that the magnetic flux of the magnetic field is restrained from passing through the four slits 523a, 523b, 523c, and 523d in the radial direction.

The magnetic flux mainly extends upward from the inner yoke 431 of the first yoke 430 toward the second yoke 440 in a region closer to the central axis 211 than the four slits 523a, 523b, 523c, and 523d (inner region). In the region outside the four slits 523a, 523b, 523c, and 523d, the magnetic flux mainly extends downward from the second yoke 440 toward the outer yoke 232 of the first yoke 430. Since the four slits are provided at a position corresponding to the position of the third space 435, the second space 434, the third space 435, and the four slits 523a, 523b, 523c, and 523d are arranged in the first direction D1. Therefore, the magnetic field generated by the second coil 450 is reliably restrained from extending through the first yoke 430 or the magnetic disc 520 in the radial direction, and a stable magnetic circuit can be obtained.

When the shaft 310 is rotated, the magnetic disc 320 rotates with respect to the first yoke 230 and the second yoke 240, and the magnetic disc 520 rotates with respect to the first yoke 430 and the second yoke 440. At this time, in the upper section 210A, the distance between the upper surface of the magnetic disc 320 and the bottom surface 236 of the first yoke 230 in the first direction D1 is maintained substantially constant, and the distance between the lower surface of the magnetic disc 320 and the top surface 241 of the second yoke 240 in the first direction D1 is maintained substantially constant. In addition, the distance between the outer peripheral surface of the magnetic disc 320 and the inner peripheral surface of the annular member 270 in the second direction D2 is also maintained substantially constant. Also in the lower section 210B, the distance between the lower surface of the magnetic disc 520 and the top surface 436 of the first yoke 430 in the first direction D1 is maintained substantially constant, and the distance between the lower surface of the magnetic disc 520 and the top surface 241 of the second yoke 440 in the first direction D1 is maintained substantially constant. In addition, the distance between the outer peripheral surface of the magnetic disc 520 and the inner peripheral surface of the annular member 270 in the second direction D2 is also maintained substantially constant.

As illustrated in Figs. 9 and 10, the gap 280 around the magnetic disc 320 is filled with the magnetic viscous fluid 360, and the gap 480 around the magnetic disc 520 is filled with the magnetic viscous fluid 560. Accordingly, in the upper section 210A, a portion of the gap 280 between the upper surface of the magnetic disc 320 and the bottom surface 236 of the first yoke 230 in the first direction D1 is filled with the magnetic viscous fluid 360, and a portion of the gap 280 between the lower surface of the magnetic disc 320 and the top surface 241 of the second yoke 240 in the first direction D1 is also filled with the magnetic viscous fluid 360. In addition, the above-described gap 281 between the outer peripheral surface of the magnetic disc 320 and the annular member 270 in the radial direction is also filled with the magnetic viscous fluid 360. The gap 280 around the magnetic disc 320 is sealed by components including the sealing member 260, the annular member 270, the shaft 310, the flange portion 312, the first yoke 230, and the second yoke 240. Therefore, the magnetic viscous fluid 360 is reliably retained in the gap 280.

In the lower section 210B, a portion of the gap 480 between the bottom surface of the magnetic disc 520 and the top surface 436 of the first yoke 430 in the first direction D1 is filled with the magnetic viscous fluid 560, and a portion of the gap 480 between the lower surface of the magnetic disc 520 and the bottom surface 441 of the second yoke 440 in the first direction D1 is also filled with the magnetic viscous fluid 560. In addition, the above-described gap 481 between the outer peripheral surface of the magnetic disc 520 and the annular member 270 in the radial direction is also filled with the magnetic viscous fluid 560. The gap 480 around the magnetic disc 520 is sealed by components including the sealing member 460, the annular member 270, the shaft 310, the flange portion 312, the first yoke 430, and the second yoke 440. Therefore, the magnetic viscous fluid 560 is reliably retained in the gap 480.

The magnetic viscous fluids 360 and 560 are a substance whose viscosity varies when a magnetic field is applied thereto. The substance is, for example, a fluid obtained by dispersing particles of a magnetic material (magnetic particles) in non-magnetic liquid (solvent). The magnetic particles contained in the magnetic viscous fluids 360 and 560 are, for example, preferably iron-based particles containing carbon or ferrite particles. The iron-based particles containing carbon preferably have a carbon content of, for example, greater than or equal to 0.15%. The diameter of the magnetic particles is preferably greater than or equal to, for example, 0.5 µm, and more preferably greater than or equal to 1 µm. The solvent and magnetic particles of the magnetic viscous fluids 360 and 560 are preferably selected so that deposition of the magnetic particles due to gravity does not easily occur. In addition, the magnetic viscous fluids 360 and 560 preferably contain a coupling agent that prevents deposition of the magnetic particles.

When a current is applied to the first coil 250, the magnetic field illustrated in Fig. 10 is generated as described above, and the magnetic flux extends through the magnetic disc 320 only in the first direction D1. Radial magnetic flux is not generated in the magnetic disc 320, or is generated such that the magnetic flux density thereof is very low. Lines of magnetic force of the generated magnetic field extend radially in the second yoke 240, and in the first direction D1 in a region outside the first coil 250. In the third yoke 290, lines of magnetic force extend radially in a direction opposite to that in the second yoke 240.

In the lower section 210B, when a current is applied to the second coil 450, the magnetic field illustrated in Fig. 10 is generated, and the magnetic flux mainly extends through the magnetic disc 520 only in the first direction D1. Radial magnetic flux is not generated in the magnetic disc 520, or is generated such that the magnetic flux density thereof is very low. Lines of magnetic force of the generated magnetic field extend radially in the second yoke 440 and in the first direction D1 in a region outside the second coil 450. In the third yoke 490, lines of magnetic force extend radially in a direction opposite to that in the second yoke 440.

When no magnetic fields are generated by the coils 250 and 450, the magnetic particles contained in the magnetic viscous fluids 360 and 560 are dispersed in the solvent. Accordingly, when an operator operates and rotates the rotating body 130 and the operating force is transmitted from the connecting shaft portion 134 to the shaft portion 311, the rotation operation unit 300 is rotated with respect to the holder unit 220 without receiving a large resistance force. When the coils 250 and 450 are not energized but residual magnetic flux is present in the yokes, the shaft 310 receives a residual resistance torque based on the density of the residual magnetic flux.

When a current is applied to each of the coils 250 and 450 so that the magnetic fields are generated, the magnetic fields are applied to the magnetic viscous fluids 360 and 560 in the first direction D1. Due to the magnetic fields, the magnetic particles dispersed in the magnetic viscous fluids 360 and 560 accumulate along the lines of magnetic force, and the magnetic particles arranged in the first direction D1 are magnetically connected to each other. In this state, when a force for rotating the shaft 310 around the central axis 211 is applied in a rotating operation of the rotating body 130, a resistance force (braking torque) generated by the magnetic particles connected to each other serves as a braking force. Therefore, the operator feels a greater resistance force than when no magnetic fields are generated.

Since the magnetic discs 320 and 520 having the shape of a circular plate that extends radially outward from the shaft 310 are used, the magnetic viscous fluids 360 and 560 can be provided over a larger area than when only the shaft 310 is provided. The magnitude of the resistance force generated by the magnetic viscous fluid 360 correlates with the area over which the magnetic viscous fluid 360 that receives the magnetic field in the up-down direction is provided between the bottom surface 236 of the first yoke 230 and the top surface 241 of the second yoke 240 in the up-down direction. The magnitude of the resistance force generated by the magnetic viscous fluid 560 correlates with the area over which the magnetic viscous fluid 560 that receives the magnetic field in the up-down direction is provided between the top surface 436 of the first yoke 430 and the bottom surface 441 of the second yoke 440 in the up-down direction. In particular, the magnitude of the resistance force generated by the magnetic viscous fluids 360 and 560 when the shaft 310 is operated such that the magnetic discs 320 and 520 are rotated correlates with the areas over which the magnetic viscous fluids 360 and 560 are provided along planes orthogonal to the rotation direction of the magnetic discs 320 and 520. The control range of the resistance force (braking torque) can be increased by increasing the area over which the magnetic viscous fluids 360 and 560 to which the magnetic fields can be applied are provided.

In the upper section 210A, the first yoke 230 is constituted by the inner yoke 231 and the outer yoke 232 so that the magnetic gap is formed in a portion of the space between the first coil 250 and the magnetic disc 320. Accordingly, the areas of the lower surface 231e of the inner yoke 231 and the lower surface 232e of the outer yoke 232 through which the magnetic flux passes are increased without increasing the outer diameter. In addition, in the lower section 210B, the first yoke 430 is constituted by the inner yoke 431 and the outer yoke 432 so that the magnetic gap is formed in a portion of the space between the second coil 450 and the magnetic disc 520. Accordingly, the areas of the upper surface 431e of the inner yoke 431 and the upper surface 432e of the outer yoke 432 through which the magnetic flux passes are increased without increasing the outer diameter. Furthermore, the magnetic flux having a magnetic field component that mainly extends in the first direction D1 can be caused to pass through the magnetic discs 320 and 520 over large areas, and the resistance force (braking torque) can be generated in a direction based on the direction of the magnetic flux. Therefore, a large shear stress can be generated without increasing the size of the device.

### <Rotating Body and Connecting Member>

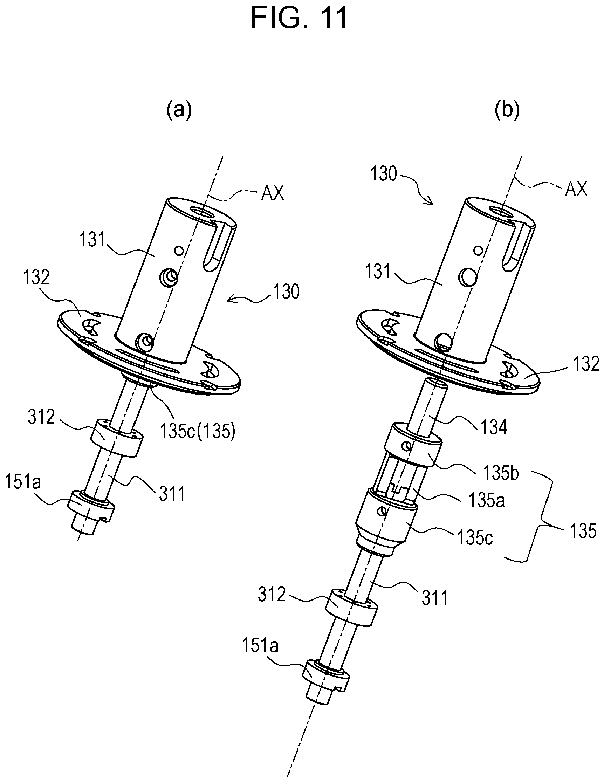

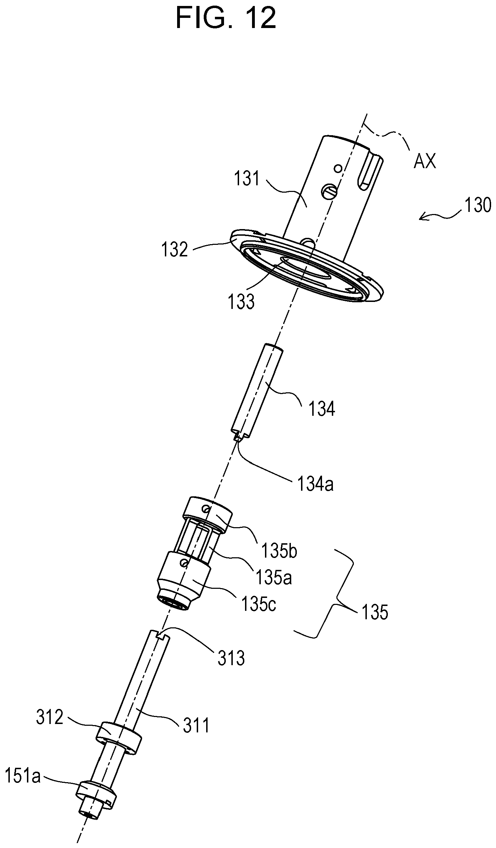

Fig. 11(a) is a perspective view of the rotating body 130, the connecting member 135, and the shaft portion 311 that are connected to each other. Fig. 11(b) is a perspective view illustrating a state in which the connecting member 135, the connecting shaft portion 134, and the shaft portion 311 are separated. Fig. 12 is an exploded perspective view of the rotating body 130 and the connecting member 135.

As illustrated in Figs. 2, 11(a), 11(b), and 12, the rotating body 130 includes a hollow cylindrical base portion 131 and a flange 132 that extends outward from the bottom end of the base portion 131. The rotating body 130 is rotatable about the rotational axis AX, which coincides with the central axis of the rotating body 130. The rotating body 130 has an internal space 133, which is open at the side at which the flange 132 is provided (see Fig. 3). The connecting shaft portion 134, which extends along the rotational axis AX, is disposed in the internal space 133.

As illustrated in Figs. 3 and 12, the connecting shaft portion 134 has the joining projection 134a that projects downward at the bottom end thereof. As illustrated in Fig. 3, the joining projection 134a is inserted into the joining recess 313 provided at the top end of the shaft portion 311 of the brake applying unit 210. Thus, the connecting shaft portion 134 and the shaft portion 311 are connected together so as to extend in the rotational axis AX. This connection enables the resistance force (braking torque) generated by the brake applying unit 210 to be transmitted from the shaft portion 311 to the rotating body 130 through the connecting shaft portion 134.

The connecting member 135 is fixed to the connecting shaft portion 134 and the shaft portion 311, which are connected to each other, so as to externally cover the connecting shaft portion 134 and the shaft portion 311 (Fig. 3). The connecting member 135 includes a hollow rod-shaped central spring portion 135a that extends along the rotational axis AX, a first fixed portion 135b provided above the central spring portion 135a, and a second fixed portion 135c provided below the central spring portion 135a. The central spring portion 135a is composed of a material having spring characteristics with respect to the central axis direction. The first fixed portion 135b is fixed to the connecting shaft portion 134, and the second fixed portion 135c is fixed to the shaft portion 311. The central spring portion 135a is disposed to cover the connecting shaft portion 134 and the shaft portion 311.

### <Rotation Detection Unit>

As illustrated in Fig. 3, an annular encoder disc 141 is provided on the bottom surface of the flange 132 of the rotating body 130 so that the encoder disc 141 extends in the circumferential direction of the flange 132. The flange 132 includes an outer edge portion 132a on the bottom surface thereof in a region outside the encoder disc 141 so that the outer edge portion 132a extends in the circumferential direction of the flange 132. The outer edge portion 132a of the flange 132 is fixed to the upper surface of the back yoke 155 so that the rotating body 130 is attached to and integrated with the rotor of the torque applying unit 150.

The encoder disc 141 forms the rotation detection unit 140 together with a detection substrate 142 and a detecting element 143. The encoder disc 141 has reflective and nonreflective portions that are alternately arranged in the circumferential direction thereof. When the rotating body 130 rotates about the rotational axis AX, the encoder disc 141 rotates about the rotational axis AX together with the rotating body 130.

As illustrated in Fig. 3, the detection substrate 142 is fixed to the upper surface of the third yoke 290 of the brake applying unit 210. The detecting element 143 is provided on the detection substrate 142, and is disposed at a position corresponding to the position of the encoder disc 141 in the direction orthogonal to the rotational axis AX.

The detecting element 143 includes a light emitting element and a light receiving element. The light emitting element emits detection light toward the encoder disc 141 in a predetermined area. The light receiving element receives light reflected by the reflective portions of the encoder disc 141, and the rotation angle of the encoder disc 141 and the rotating body 130 on which the encoder disc 141 is provided is detected based on the result of the light receiving process. The result of the detection is output to the controller 160 (Fig. 4).

### <Controller>

The controller 160 supplies currents controlled based on the detection result obtained by the detecting element 143 to the air-core coils 153a to 153h (torque applying coils) of the coil unit 153 and the two coils 250 and 450 (brake applying coils) of the brake applying unit 210. The controller 160 is capable of individually controlling application of current to the torque applying coils and application of current to the brake applying coils. The controller 160 is also capable of individually controlling the currents applied to the air-core coils 153a to 153h and the currents applied to the two coils 250 and 450 of the brake applying unit 210. The controller 160 is also capable of causing the torque applying unit 150 to generate a driving torque and the brake applying unit 210 to generate a braking force simultaneously or at different times. The above-described current control enables the torque applying coils to generate the driving torque and the brake applying unit to generate the braking force at any timing. Accordingly, various operation sensations can be provided to the user.

### <Operation of Input Device 110>

According to the above-described structure, when the torque applying unit 150 is driven, the magnet unit 154 and the back yoke 155, which are integrated with each other, are rotated or turned about the rotational axis AX due to the magnetic fields induced by the air-core coils 153a to 153h, which serve as torque applying coils. Accordingly, the rotating body 130, which is fixed to the back yoke 155, receives a driving torque around the rotational axis AX.

More specifically, when currents are applied to each of the air-core coils 153a to 153h in four patterns illustrated in Figs. 5(a) to 5(d), the magnet unit 154 can be rotated or turned about the rotational axis AX with respect to the base plate 151, the fixed member 152, and the coil unit 153 fixed to the fixed portion 120. Accordingly, the back yoke 155 fixed to the magnet unit 154 is also rotated or turned, and the driving torque for rotating or turning the rotating body 130 fixed to the back yoke 155 is transmitted to the rotating body 130.

The direction of the driving torque is controlled based on the directions in which the currents are applied in the four patterns illustrated in Figs. 5(a) to 5(d). When the directions of all of the currents applied in the four patterns are reversed, a driving torque is generated in the reverse direction, so that the rotating body 130 is rotated or turned in the reverse direction. A driving torque of any magnitude can be applied to the rotating body 130 by controlling the magnitudes of the currents applied to the air-core coils 153a to 153h with the controller 160. In addition, variation in the driving torque depending on the relative positions between the air-core coils 153a to 153h and the magnets can be reduced. Thus, a predetermined operation sensation can be provided to the operator that operates the rotating body 130.

When magnetic cores or magnetic salient poles that face the magnets are provided as in an ordinary motor, a magnetic attraction force is applied between the magnets and the magnetic bodies, and a cogging torque, which is a torque variation based on a magnetic circuit, is generated even in a rotating operation in which the coils are not energized.

In contrast, the input device 110 of the present embodiment is structured such that magnetic cores having salient poles are not provided and that the air-core coils having no salient poles are used. Therefore, no cogging torque is generated in a rotating operation in which the coils are not energized.

In addition, according to the present embodiment, the air-core coils 153a to 153h are held by the fixed member 152 composed of a non-magnetic body. Therefore, the magnetic attraction force between the magnets and the magnetic bodies may be set to 0. Thus, the rotating operation in which the air-core coils 153a to 153h are not energized can be performed in a state close to an ideal state, that is, a so-called torque-free state.

The combination of the number of air-core coils included in the coil unit 153 and the number of magnets included in the magnet unit 154 is not limited to that in the present embodiment. In addition, the air-core coils may be replaced by, for example, coils formed by winding wires around non-magnetic cores as long as an equivalent magnetic circuit can be obtained.

The rotating body 130 receives a braking force from the brake applying unit 210 through the connecting shaft portion 134. The brake applying unit 210 will now be described.

As illustrated in Fig. 4, the first coil 250 and the second coil 450 are connected to the controller 160, and the controller 160 controls currents to be applied to the two coils 250 and 450 and applies the currents to the two coils 250 and 450. In the example illustrated in Figs. 9 and 10, currents are simultaneously applied to the two coils 250 and 450 so that magnetic flux extends in the direction away from the central axis 211 in each of the two magnetic discs 320 and 520. However, the applied currents may instead be controlled so that magnetic flux extends through the two magnetic discs 320 and 520 in the opposite directions. Alternatively, a current may be applied to only one of the coils. The currents applied to the two coils 250 and 450 may be either the same or different.

When the controller 160 applies currents to the two coils 250 and 450, which serve as brake applying coils, the above-described magnetic fields are generated and magnetic flux passes through each of the magnetic discs 320 and 520 in the up-down direction. The density of magnetic flux extending in the radial direction is very low in the magnetic discs 320 and 520.

When no magnetic field is generated by the coils 250 and 450, the magnetic particles contained in the magnetic viscous fluids 360 and 560 are dispersed in the solvent. Therefore, the connecting shaft portion 134 connected to the shaft portion 311 hardly receives a braking force. Therefore, the operator can operate and rotate the rotating body 130 without receiving a large braking force from the brake applying unit 210.

When a current is applied to each of the coils 250 and 450, which serve as brake applying coils, so that the magnetic fields are generated, the magnetic fields are applied to the magnetic viscous fluids 360 and 560 in the up-down direction. Due to the magnetic fields, the magnetic particles dispersed in the magnetic viscous fluids 360 and 560 accumulate along the lines of magnetic force, and the magnetic particles arranged in the up-down direction are magnetically connected to each other. When the rotating body 130 is operated and rotated in this state, a resistance force (braking torque) generated by the magnetic particles connected to each other is applied to the shaft portion 311. Accordingly, a braking force is transmitted from the shaft portion 311 to the rotating body 130 through the connecting shaft portion 134, which is connected to the shaft portion 311. Therefore, the operator feels a greater resistance force than when no magnetic fields are generated. When the currents applied to the first coils 250 and 450 are controlled to vary the intensities of the magnetic fields, the resistance force felt by the operator can be increased or reduced, so that the operation sensation provided to the operator can be varied. Thus, not only variable control of the driving torque applied by the torque applying unit 150 but also variable control of the braking force of a desired magnitude can be achieved, so that various operation sensations can be provided to the operator that operates the rotating body 130.

The controller 160 applies predetermined currents to the two coils 250 and 450, which serve as brake applying coils, when the rotation angle detected by the detecting element 143 reaches a predetermined angle set in advance. Accordingly, the shaft portion 311 applies a strong braking force to the rotating body 130 through the connecting shaft portion 134, so that the operator that operates the rotating body 130 feels an operation sensation as if the rotating body 130 has been stopped by an imaginary stopper (end-stop state).

When the rotating body 130 is operated and rotated in the reverse direction while the rotation of the shaft portion 311 of the brake applying unit 210 is stopped in the end-stop state, the central spring portion 135a of the connecting member 135 fixed to the connecting shaft portion 134 and the shaft portion 311 is twisted. When the shaft portion 311 is twisted by the elastic force of the central spring portion 135a, the rotation of the rotating body 130 can be detected by the rotation detection unit 140, and the end-stop state is canceled based on the result of the detection. Accordingly, a smooth operation sensation with small roughness can be provided to the operator.

The above-described input device 110 has the following effects.
(1) Since the torque applying unit 150 is disposed to surround the outer periphery of the brake applying unit 210, size reduction in the direction of the rotational axis AX of the rotating body 130 can be achieved. In addition, since the torque applying unit 150 and the brake applying unit 210 can be disposed close to each other, size reduction in the direction orthogonal to the rotational axis AX can also be achieved.
(2) Since the currents applied to the two coils 250 and 450, which serve as brake applying coils, and the currents applied to the air-core coils 153a to 153h, which serve as torque applying coils, can be individually controlled by the controller 160, and since the braking force and the driving torque can be generated simultaneously, various operation sensations can be provided to the operator.
(3) The torque applying unit 150 includes the rotor that is supported such that the rotor is rotatable together with the rotating body 130 and the stator disposed to surround the radially outer periphery of the rotor. The rotor includes the annular back yoke 155 and the magnets 154a to 154f, which are provided on the outer periphery of the back yoke 155 and arranged such that poles of different polarities are alternately arranged in the circumferential direction of the back yoke 155. The stator is disposed to face the magnets 154a to 154f and includes the air-core coils 153a to 153h, which serve as torque applying coils and which are formed of non-magnetic windings, and the fixed member 152, to which the air-core coils 153a to 153h are fixed. Since magnetic cores having salient poles are not provided and the air-core coils 153a to 153h having no salient poles are used, no cogging torque is generated in a rotating operation in which the air-core coils 153a to 153h are not energized. Therefore, the operation sensations are not adversely affected by a cogging torque. In addition, since the fixed member 152 of the stator is formed of a non-magnetic body, not only cogging due to variation in magnetic attraction force but also a rotational resistance due to a magnetic attraction force of a permanent magnet can be prevented.
(4) The air-core coils 153a to 153h are provided as torque applying coils, and currents are applied thereto so that adjacent air-core coils generate magnetic fields in the opposite directions. The air-core coils 153a to 153h are energized such that two adjacent coils and other two coils that are symmetric to the two adjacent coils about the rotational axis AX simultaneously receive currents in phase A, and that the remaining four coils simultaneously receive currents in phase B. Accordingly, the curvature of the torque applying unit 150 can be reduced, so that the torque applying unit 150 can be easily manufactured. In addition, the area of the region in which the magnetic flux generated by the magnets 154a to 154f extends through the air-core coils 153a to 153h can be increased without increasing the overall length in the direction of the rotational axis AX, and the driving torque can be increased accordingly.
(5) The connecting shaft portion 134 that extends from the rotating body 130 and the shaft portion 311 that extends from the brake applying unit 210 are connected to each other with the connecting member 135 having spring characteristics. Accordingly, a phase difference can be generated between the rotating operation of the shaft portion 311 of the brake applying unit 210 and the rotating operation of the rotating body 130. Therefore, even when the shaft portion 311 of the brake applying unit 210 is stopped in the end-stop state, if a low torque is applied to the rotating body 130, the shaft portion 311 is twisted in response to the rotation of the rotating body 130. Accordingly, the rotation of the rotating body 130 can be detected by the rotation detection unit 140, and a smooth operation sensation with small roughness can be provided to the operator by cancelling the end-stop state based on the result of the detection.
(6) The coil unit 153, which serves as torque applying coils, and the two coils 250 and 450, which serve as brake applying coils, have center lines that are orthogonal to each other. Therefore, even when the torque applying coils and the brake applying coils are disposed close to each other, interference between the magnetic fields generated thereby can be reduced. Accordingly, the influence of the magnetic fields generated by the torque applying coils on the magnetic viscous fluids 360 and 560 of the brake applying unit 210 can be reduced.

Although the present invention has been described with reference to the embodiment, the present invention is not limited to the above-described embodiment, and improvements and modifications can be made for improvement purposes or within the spirit of the present invention.

### Industrial Applicability

As described above, the input device according to the present invention is useful in that the size thereof in the direction of the rotational axis can be reduced.

### Reference Signs List

110 input device
120 fixed portion
121 opening
130 rotating body
131 base portion
132 flange
133 internal space
134 connecting shaft portion
135 connecting member
135a central spring portion
135b first fixed portion
135c second fixed portion
140 rotation detection unit
141 encoder disc
142 detection substrate
143 detecting element
150 torque applying unit
151 base plate
152 fixed member
153 coil unit (torque applying coil)
153a, 153b, 153c, 153d, 153e, 153f, 153g, 153h air-core coil (torque applying coil)
154 magnet unit
154a, 154b, 154c, 154d, 154e, 154f magnet
155 back yoke
156 coil holder
160 controller
210 brake applying unit
210A upper section
210B lower section
211 central axis
220 holder unit
230, 430 first yoke
231, 431 inner yoke
232, 432 outer yoke
233, 433 first space
233x center position
234, 434 second space
235x center position
235, 435 third space
240, 440 second yoke
242, 442 hole
250 first coil (brake applying coil)
260, 460 sealing member
270 annular member
280, 480 gap
281, 481 gap
290, 490 third yoke
300 rotation operation unit
310 shaft
311 shaft portion
312 flange portion
313 joining recess
320, 520 magnetic disc
360, 560 magnetic viscous fluid
436 top surface
441 bottom surface
450 second coil (brake applying coil)
AX rotational axis
D1 first direction
D2 second direction

## Claims

1. An input device comprising:
a fixed portion;
a rotating body supported such that the rotating body is rotatable about a rotational axis;
a rotation detection unit configured to detect a rotation of the rotating body;
a brake applying unit configured to apply a braking force to the rotating body; and
a torque applying unit configured to apply a driving torque for rotating the rotating body about the rotational axis to the rotating body,
wherein the brake applying unit includes a rotary plate rotatable together with the rotating body, magnetic viscous fluid disposed in a gap between the fixed portion and the rotary plate, and a brake applying coil configured to apply a magnetic field to the magnetic viscous fluid,
wherein the torque applying unit includes a stator and a rotor supported such that the rotor is rotatable with respect to the stator,
wherein one of the stator and the rotor of the torque applying unit includes a magnet and other of the stator and the rotor of the torque applying unit includes torque applying coils of at least two phases, the torque applying coils inducing magnetic fields for generating the driving torque applied to the rotating body,
wherein a controller is provided to control currents applied to the brake applying coil and the torque applying coils, and
wherein the torque applying unit is disposed to surround an outer periphery of the brake applying unit.

2. The input device according to Claim 1, wherein the controller is capable of individually controlling a current applied to the brake applying coil and currents applied to the torque applying coils, and is capable of simultaneously generating the braking force and the driving torque.

3. The input device according to Claim 1 or 2, wherein the rotor is supported such that the rotor is rotatable together with the rotating body, and includes an annular back yoke and a plurality of permanent magnets provided on an outer periphery of the back yoke and arranged such that poles of different polarities are alternately arranged in a circumferential direction of the back yoke, and
wherein the stator is disposed to surround a radially outer periphery of the rotor and face the permanent magnets, and includes coils formed of non-magnetic windings and a fixed member to which the coils are fixed, the coils serving as the torque applying coils.

4. The input device according to Claim 3, wherein the torque applying coils include eight torque applying coils, and currents are applied to the torque applying coils such that adjacent ones of the torque applying coils generate magnetic fields in opposite directions, and
wherein two adjacent ones of the torque applying coils and two of the torque applying coils symmetric to the two adjacent ones of the torque applying coils about the rotational axis simultaneously receive currents in phase A, and remaining four of the torque applying coils simultaneously receive currents in phase B.

5. The input device according to any one of Claims 1 to 4, wherein the brake applying unit includes a shaft portion configured to rotate together with the rotary plate, and the shaft portion is connected to the rotating body by a connecting member having spring characteristics.

6. The input device according to any one of Claims 1 to 5, wherein the torque applying coils and the brake applying coil are arranged such that a center line of each of the torque applying coils is orthogonal to a center line of the brake applying coil.
